Europäisches Patentamt

European Patent Office

Office européen des brevets

(19)

(11) EP 1 351 518 A2

(12) **EUROPEAN PATENT APPLICATION**

(43) Date of publication:
08.10.2003 Bulletin 2003/41

(51) Int Cl.⁷: **H04N 7/50**, H04N 7/26

(21) Application number: 03251606.4

(22) Date of filing: 17.03.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **28.03.2002 GB 0207455**

(71) Applicant: **SONY UNITED KINGDOM LIMITED**
**Weybridge KT13 0XW (GB)**

(72) Inventors:
• **Porter, Robert Mark Stefan**
**Winchester, Hampshire SO22 5AJ (GB)**
• **Saunders, Nicholas Ian**
**Basingstoke, Hampshire RG24 0RL (GB)**

(74) Representative: **Turner, James Arthur et al**
**D. Young & Co.,**
**21 New Fetter Lane**
**London EC4A 1DA (GB)**

(54) **Data compression for multi-generation images**

(57)    A data compression apparatus operable to compress input data, in accordance with a predetermined target output data quantity, by performing data quantisation at a degree of quantisation taken from a set of available degrees of quantisation comprises one or more trial quantisers for performing trial quantisations at respective trial degrees of quantisation, the trial degrees of quantisation being taken from a subset of the set of available degrees of quantisation; a selector for selecting a final degree of quantisation in response to the results of the trial quantisations, the final degree of quantisation being selected from the set of available degrees of quantisation such that the target output data quantity is not exceeded; and a final quantiser operable to quantise the input data at the final degree of quantisation.

Fig. 2

EP 1 351 518 A2

Printed by Jouve, 75001 PARIS (FR)

**Description**

The present invention relates to data compression.

Data compression techniques are used extensively in the data communications field in order to communicate data at bit rates that can be supported by communication channels having dynamically changing but limited bandwidths. Image data is typically compressed prior to either transmission or storage on an appropriate storage medium and it is decompressed prior to image reproduction.

In the case of still images data compression techniques take advantage of spatial redundancy, whilst for moving images both spatial and temporal redundancy is exploited. Temporal redundancy arises in moving images where successive images in a temporal sequence, particularly images belonging to the same scene, can be very similar. The Motion Picture Experts Group (MPEG) has defined international standards for video compression encoding for entertainment and broadcast applications. The present invention is relevant to (though not all restricted to) implementations of the MPEG4 "Studio Profile" standard that is directed to high end video hardware operating at very high data rates (up to 1 Gbit/s) using low compression ratios.

Discrete Cosine Transform (DCT) Quantisation is a widely used encoding technique for video data. It is used in image compression to reduce the length of the data words required to represent input image data prior to transmission or storage of that data. In the DCT quantisation process the image is segmented into regularly sized blocks of pixel values and typically each block comprises 8 horizontal pixels by 8 vertical pixels ($8_H \times 8_V$). In conventional data formats video data typically has three components that correspond to either the red, green and blue (RGB) components of a colour image or to a luminance component Y along with two colour difference components Cb and Cr. A group of pixel blocks corresponding to all three RGB or YCbCr signal components is known as a macroblock (MB).

The DCT represents a transformation of an image from a spatial domain to a spatial frequency domain and effectively converts a block of pixel values into a block of transform coefficients of the same dimensions. The DCT coefficients represent spatial frequency components of the image block. Each coefficient can be thought of as a weight to be applied to an appropriate basis function and a weighted sum of basis functions provides a complete representation of the input image. Each $8_H \times 8_V$ block of DCT coefficients has a single "DC" coefficient representing zero spatial frequency and 63 "AC" coefficients. The DCT coefficients of largest magnitude are typically those corresponding to the low spatial frequencies. Performing a DCT on an image does not necessarily result in compression but simply transforms the image data from the spatial domain to the spatial frequency domain. In order to achieve compression each DCT coefficient is divided by a positive integer known as the quantisation divisor and the quotient is rounded up or down to the nearest integer. Larger quantisation divisors result in higher compression of data at the expense of harsher quantisation. Harsher quantisation results in greater degradation in the quality of the reproduced image. Quantisation artefacts arise in the reproduced images as a consequence of the rounding up or down of the DCT coefficients. During compressed image reproduction each DCT coefficient is reconstructed by multiplying the quantised coefficient (rounded to the nearest integer), rather than the original quotient, by the quantisation step which means that the original precision of the DCT coefficient is not restored. Thus quantisation is a "lossy" encoding technique.

Image data compression systems typically use a series of trial compressions to determine the most appropriate quantisation divisor to achieve a predetermined output bit rate. Trial quantisations are carried out at, say, twenty possible quantisation divisors spread across the full available range of possible quantisation divisors. The two trial adjacent trial quantisation divisors that give projected output bit rates just above and just below the target bit rate are identified and a refined search is carried out between these two values. Typically the quantisation divisor selected for performing the image compression will be the one that gives the least harsh quantisation yet allows the target bit rate to be achieved.

Although selecting the least harsh quantisation will result in the best possible image quality (i.e. the least noisy image) on reproduction for "source" image data that has not undergone one or more previous compression/decompression cycles, it has been established that this is not necessarily the case for "non-source" image data. An image that has been compressed and decompressed once is referred to as a 1st generation image, an image that has been subject to two previous compression/decompression cycles is known as a 2nd generation and so on for higher generations.

Typically the noise in the image will be systematically higher across the full range of quantisation divisors for the 2nd generation reproduced image in comparison to the noise at a corresponding quantisation divisor for the 1st generation reproduced image. This can be understood in terms of the DCT coefficient rounding errors incurred at each stage of quantisation. However, it is known that when the 2nd generation quantisation divisor is chosen to be substantially equal to that used in the 1st generation compression, the noise levels in the 2nd generation reproduced image will be substantially equal to the noise levels in the 1st generation reproduced image. Thus for non-source input image data the quantisation divisor having the smallest possible magnitude that meets a required data rate will not necessarily give the best reproduced image quality. Instead, a quantisation divisor substantially equal to that used in a previous compression/decompression cycle is likely to give the best possible reproduced image quality. Note however that the choice of quantisation divisor is constrained by the target bit rate associated with the particular communication channel which may vary from generation to generation.

As explained above, as part of the data compression process, a series of trial compressions is performed to determine the most appropriate quantisation divisor that allows a predetermined output bit rate to be achieved. A process known as bit allocation is performed in which target bit counts are calculated for each Macro-Block. This bit allocation calculation involves analysing the number of bits produced as a function of the trial quantisation divisor. The bit allocation module calculates Macro-Block target bit counts based on bit counts from the trial quantisations. A further process known as binary search is then used to find the least harsh quantisation divisor that meets the Macro-Block target bit count.

The spacing of the trial bit allocation points will affect the extrapolated values for the target bit counts for the Macro-Blocks. This poses a particular problem when dealing with multi-generation image data where, in order to achieve the best image quality, MB targets must be repeatable from one generation to the next. It is also important that an appropriate quantisation divisor is selected by the bit allocation process for higher generation images. The quantisation divisor selected by the bit allocation process is used to determine the starting point for a higher resolution series of trial quantisations known as a binary search. It is a problem to define spacing of the trial bit allocation points in order to achieve accurate and repeatable targets over multi-generations of image data.

This invention provides a data compression apparatus operable to compress input data, in accordance with a predetermined target output data quantity, by performing data quantisation at a degree of quantisation taken from a set of available degrees of quantisation, the apparatus comprising:

one or more trial quantisers for performing trial quantisations at respective trial degrees of quantisation, the trial degrees of quantisation being taken from a subset of the set of available degrees of quantisation;
a selector for selecting a final degree of quantisation in response to the results of the trial quantisations, the final degree of quantisation being selected from the set of available degrees of quantisation such that the target output data quantity is not exceeded; and
a final quantiser operable to quantise the input data at the final degree of quantisation.

By ensuring that the trial quantisation process uses one or more degrees of quantisation taken from a subset of the available degrees of quantisation, it is more likely that equivalent results will be obtained from generation to generation, or for otherwise similar data, so leading to reduced errors in multi-generation compression and/or less variation in the quantisation of similar material.

Embodiments of the invention will now be described, by way of example only, with reference to the accompanying drawings in which:

Figure 1 is a schematic diagram of a compression encoder and a corresponding decoder for use with a data recording/reproducing device or a data transmission/reception system;
Figure 2 schematically illustrates the bit rate reducing encoder of Figure 1;
Figure 3 is a table of parameters used in the bit rate reduction process of the encoder of Figure 1.
Figure 4 schematically illustrates the decoder of Figure 1;
Figure 5 schematically illustrates the internal structure of the bit allocation module of Figure 2;
Figure 6A illustrates a system for assigning trial quantisation divisors during bit allocation;
Figure 6B schematically illustrates a bits versus Q curve corresponding to Figure 6A;
Figure 7A is a bits versus Q curve for $2^{nd}$ generation image data;
Figure 7B shows target extrapolation for the $2^{nd}$ generation image data of Figure 7A;
Figures 8A to 8C schematically illustrate how the predetermined subset of Q_SCALE_CODES is used to reduce variation in the selected bit allocation points;
Figure 9A shows two linear sets of fixed bit allocation points according to embodiments of the invention;
Figure 9B is an illustrative graph of bits versus Q_SCALE for a limiting case;
Figure 9C shows a non-linear set of fixed bit allocation points according to embodiments of the invention;
Figure 10 is a flow chart representing the algorithm implemented on each Macro-Block Unit by the bit allocation module;
Figure 11A is an illustrative graph of MBU DCT_BITS against Q_SCALE;
Figure 11B is a graph of MBU_DCT_BITS against Q_SCALE in a case where quantisation is too harsh for all 6 trial quantisation values; and
Figure 11C is a graph of MBU_DCT_BITS against Q_SCALE in a case where quantisation is not harsh enough for any of 6 trial quantisation values.

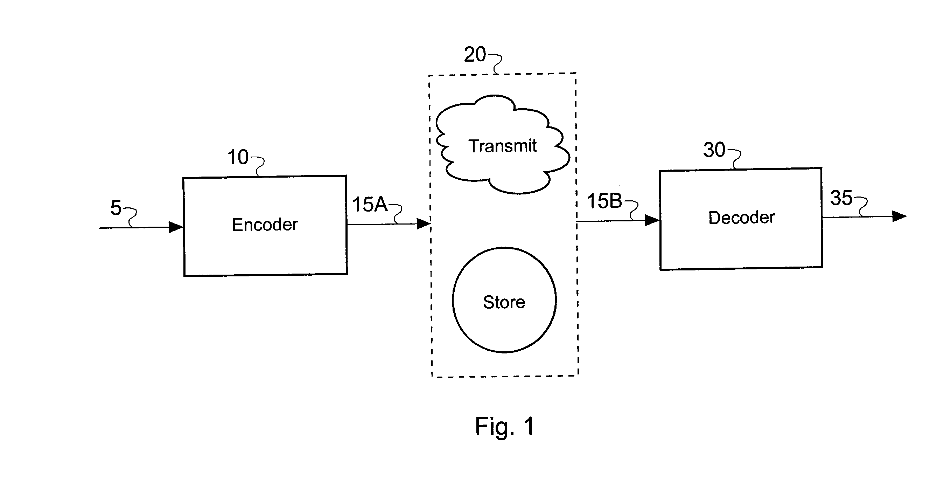

Figure 1 is a schematic diagram of a data compression system. This system comprises an encoder 10, a data processing module 20 and a decoder 30. An input high definition video signal 5 is received by the encoder 10. The encoder 10 models the video image data to remove redundancy and to exploit its statistical properties. It produces output data symbols which represent the information in the input image data 5 in a compressed format. The encoder 10 outputs a compressed data signal 15A which is supplied as input to the data processing module 20 where it is either transmitted across a communication channel or stored on a recording medium. A compressed data signal 15B that was either read from the recording medium or received across a communication network is supplied to the decoder 30 that decodes the compressed data signal 15B to form a high definition image output signal 35.

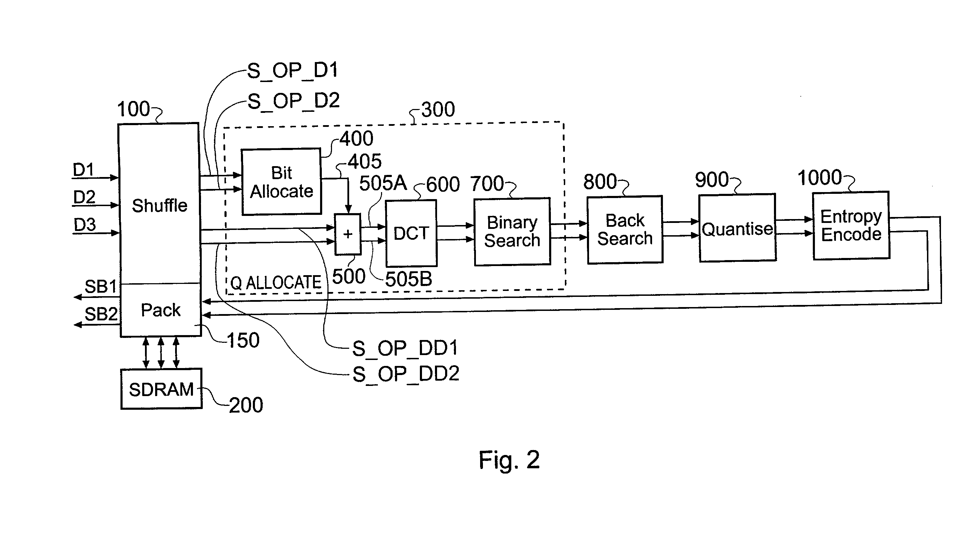

Figure 2 schematically illustrates the bit rate reducing encoder of Figure 1. Data signals D1, D2 and D3 correspond to RGB input channels for high definition video frames, which are supplied as input to a shuffle unit 100. It will be appreciated that in an alternative embodiment the data could be supplied in $YC_BC_R$ format. The images can be processed either in a progressive frame mode or in an interlaced field mode. The shuffle unit serves to distribute the input data into Macro-Block Units (MBUs). In this embodiment there are 40 MBUs per video frame, each of which comprises 204 MBs. Image samples of each input frame are temporarily written to an external SDRAM 200. During this shuffle write process the values for two quantisation divisor parameters Q_START and DCT_PRECISION, which are required for the subsequent encoding process, are calculated. Blocks of pixels are read from the external SDRAM 200 according to a predetermined shuffle ordering that serves to interleave the image data so that blocks of pixels which are adjacent in the input image frame are not read out at adjacent positions in the shuffle ordering.

The shuffle process alleviates the effect of data losses on the image reconstructed by the decoder apparatus. Pixel blocks that are adjacent to each other in the input video frame are separated in the shuffled bit stream. A short duration data loss in which a contiguous portion of the bit stream is corrupted may affect a number of data blocks but due to the shuffling these blocks will not be contiguous blocks in the reconstructed image. Thus data concealment can feasibly be used to reconstruct the missing blocks. The shuffle process improves the picture quality during shuttle playback. It also serves to reduce the variation in the quantisation parameters selected for the MBUs in an image frame by distributing input video data pseudo-randomly in the MBUs.

A current image frame is written to the external SDRAM 200 while a previous frame is read, in shuffled format, from the external SDRAM 200. The shuffle unit 100 generates two output signal pairs: a first pair comprising signals S_OP_D1 and S_OP_D2 and a second pair comprising signals S_OP_DD1 and S_OP_DD2 which contain the same MBU data but delayed by approximately one MBU with respect to the data of the first signal pair. This delay serves to compensate for the processing delay of a bit allocation module 400 belonging to a Q allocation unit 300. The first signal pair S_OP_D1 and S_OP_D2 is used by the Q allocation unit 300 to determine an appropriate coding mode and a quantisation divisor known as a Q_SCALE parameter for each MB of the MBU.

The output signals from the shuffle unit 100 are supplied to the Q allocation unit 300 that comprises the bit allocation module 400, a target insertion module 500, a DCT module 600 and a binary search module 700. The first output signal pair S_OP_D1 and S_OP_D2 from the shuffle unit 100 are supplied as input to the bit allocation module 400. The input to the bit allocation module 400 comprises raster scanned $8_H \times 8_V$ vertical blocks of 12-bit video samples.

The bit allocation module 400 performs a comparison between lossless differential pulse code modulation (DPCM) encoding and DCT quantisation encoding.

DPCM is a simple image compression technique that takes advantage of the fact that spatially neighbouring pixels in an image tend to be highly correlated. In DPCM the pixel values themselves are not transmitted. Rather, a prediction of the probable pixel value is made by the encoder based on previously transmitted pixel values. A single DPCM encoding stage involves a DPCM reformat, a DPCM transform and entropy encoding calculations.

By way of contrast, the DCT quantisation encoding involves a single DCT transform plus several stages of quantisation using a series of quantisation divisors, each quantisation stage being followed by Huffman entropy encoding calculations. In this embodiment 4 trial quantisation divisors are tested by the bit allocation module 400. Huffman coding is a known lossless compression technique in which more frequently occurring values are represented by short codes and less frequent values with longer codes. The DCT trial encoding stages optionally involve quantisation that is dependent on the "activity" of an image area. Activity is a measure calculated from the appropriately normalised pixel variance of an image block. Since harsher quantisation is known to be less perceptible to a viewer in image blocks having high activity the quantisation step for each block can be suitably adjusted according to its activity level. Taking account of activity allows for greater compression while maintaining the perceived quality of the reproduced image.

The DPCM and DCT quantisation trial encoding stages are used to calculate MB bit targets constrained by a predetermined frame target calculated from the required encoding bit rate. For each MB the mode (DCT or DPCM) that gives the fewest encoded bits is selected. The bit allocation module outputs a signal 405 to the target insertion module 500. The signal 405 comprises information about the encoding mode selected for each Macro-Block, a Q_SCALE quantisation divisor $Q_{BASE}$ to be used by a binary search module 700 and a bit target for each Macro-Block. The $Q_{BASE}$ value, encoding mode information and the bit target for each Macro-Block in the signal 405 is added to the bit stream of the delayed image data to which it corresponds by the target insertion module 500. The target insertion module 500 outputs two signals 505A and 505B which are supplied as inputs to the DCT module 600.

The DCT module 600 again calculates DCT coefficients, this time based on the delayed version of the image data. The DCT module 600 outputs the data to the binary search module 700. The binary search module 700 performs a second stage of Q allocation for each of the DCT mode MBs and uses a binary search technique to determine an appropriate quantisation divisor for each Macro-Block. The binary search module 700 determines the quantisation divisor to a higher resolution (within a given range of available quantisation divisors) than the resolution used by the bit allocation module 400 and finds the lowest available Q_SCALE that meets the target set by the bit allocation module 400 for each Macro-Block. In fact $Q_{BASE}$ is used to define a starting point for a five stage binary search that results in the selection of a higher resolution quantisation step $Q_{ALLOC}$ for each DCT mode Macro-Block. The DPCM mode Macro-Blocks are routed through the binary search module 700 via a bypass function so that the data is unaltered on output.

The output from the binary search module 700 that includes the value $Q_{ALLOC}$ for each DCT mode Macro-Block is supplied to a back search module 800. The back search module 800 checks that the $Q_{ALLOC}$ value chosen for each MB is the "best" quantisation scale for encoding. As explained in the introduction, for image data that has undergone at least on previous encode/decode cycle, the least harsh quantisation that is achievable for a given target bit count will not necessarily give the smallest possible quantisation error for the Macro-Block. Instead, the smallest quantisation error is likely to be achieved by using a quantisation divisor that is substantially equal to the quantisation divisor used in the previous encode/decode cycle. Accordingly, the back search module 800 estimates the quantisation error for a range of quantisation divisors starting at $Q_{ALLOC}$ and working towards harsher quantisations. It determines the quantisation step $Q_{FINAL}$ that actually produces the smallest possible quantisation error. The trial quantisations are performed on DCT mode Macro-Blocks only and a bypass function is provided for DPCM mode macroblocks.

The output from the back search module 800 which includes DCT blocks generated by the DCT encoder 600 together with the selected quantisation step $Q_{FINAL}$ is supplied to a quantiser 900 where the final quantisation is performed. The quantisation procedure is as follows:

In DCT mode encoding the single DC coefficient of each $8_H \times 8_V$ block is quantised according to the equation :

$$Q(DC) = DC / (DC\_QUANT * DCT\_SCALER)$$

where DC is the unquantised coefficient and, DC_QUANT is a quantisation factor that is set by the system and is used to quantise all of the MBs. DC_QUANT is determined from DC_PRECISION as shown in the table below

| DC_PRECISION | 00 | 01 | 10 | 11 |
|---|---|---|---|---|
| DC_QUANT | 8 | 4 | 2 | 1 |

DC_PRECISION is set to a fixed value, preferably 00, for each frame.

DCT_SCALER is a quantisation factor determined by the DCT_PRECISION index such that DCT_SCALER $= 2^{DCT\_PRECISION}$. In this embodiment a convention is used where DCT_PRECISION has the four possible values 0, 1, 2, 3 and 3 corresponds to the most harsh quantisation. Note that a different convention is used in the MPEG4 studio profile standard where DCT_PRECISION = 0 corresponds to the most harsh quanisation while DCT_PRECISION = 3 corresponds to the least harsh quantisation.

Similarly the 63 AC coefficients of the block are quantised according to the equation:

$$Q(AC) = (AC*16) / (Q\_MATRIX*AC\_QUANTISE*DCT\_SCALER)$$

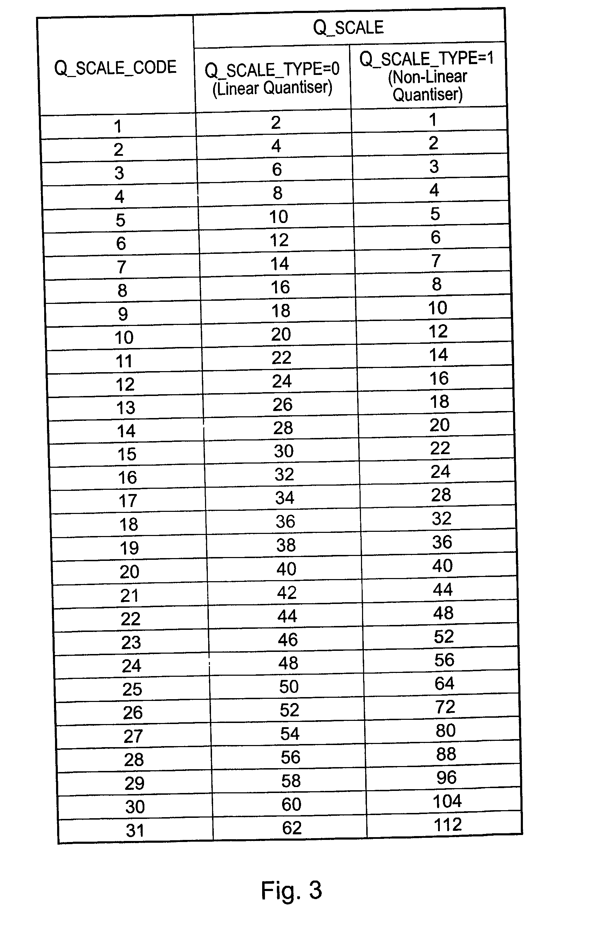

where AC is the unquantised coefficient, Q_MATRIX is an array of 64 weights, one for each element of the DCT block and Q_SCALE is a factor corresponding to either a linear quantiser scale or a non-linear quantiser scale, as specified by a Q_SCALE_TYPE. Each of the Q_SCALE_TYPEs comprises 31 possible values denoted Q_SCALE_CODE(1) to QSCALE_CODE(31). The table of Figure 3 shows the Q_SCALE values associated with each Q_SCALE_TYPE for all 31 Q_SCALE_CODEs. In the above equation NORM_ACT is a normalised activity factor that lies in the range 0.5 to 2.0 for "activity on" but is equal to unity for "activity off".

AC_QUANTISE = NORM_ACT*Q_SCALE and is rounded up to the nearest Q_SCALE i.e. a Q_SCALE that corresponds to a Q_SCALE_CODE in the Table of Figure 3 before it is included as part of the divisor.

The results of the quantisations Q(DC) and Q(AC) are rounded using the known technique of normal infinity rounding. This technique involves rounding positive numbers less than 0.5 down (towards zero) and positive numbers greater than or equal to 0.5 up (towards plus infinity), whereas negative numbers greater than -0.5 are rounded up (towards zero) and negative numbers less than or equal to -0.5 are rounded down (towards minus infinity).

The bit allocation module 400, the binary search module 700 and the back search module 800 each implement a quantisation process in accordance with that implemented by the quantise module 900 as detailed above. However, in the binary search module 700 and the back search module 800 the factor NORM_ACT is always set equal to 1. Only during the bit allocation process carried out by bit allocation module 400, does NORM_ACT take a value other than 1. Since the MB targets generated during bit allocation take account of activity it need not be taken into account at subsequent stages.

The quantised data are output from the quantise module 900 and are subsequently supplied to an entropy encoder 1000 where lossless data compression is applied according to the standard principles of entropy encoding. In this embodiment Huffman encoding is used

The output from the entropy encoder 1000 is supplied to a packing module 150 within the shuffle unit 100. The packing module 150 together with the external SDRAM 200 is used to pack the variable length encoded data generated by the entropy encode module 1000 into fixed length sync-blocks. A sync-block is the smallest data block that is separately recoverable during reproduction of the image.

The packing function is implemented by manipulation of the SDRAM read and write addresses. Each MBU is allocated a fixed packing space in the SDRAM which is then subdivided into a nominal packing space for each MB. The total length of each MB must also be stored and this can either be calculated from the individual word lengths or passed directly from the entropy encode module 1000 to the packing module 150. The output from the encoder 10 comprises sync-block 1 data output SB1 and sync-block 2 data output SB2. An indication of the quantisation divisors used in the encoding process is also transmitted to the decoder 30.

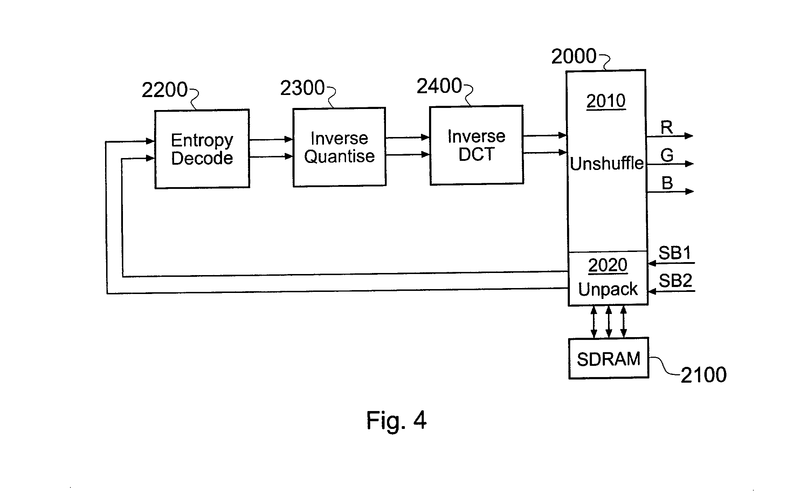

Figure 4 schematically illustrates the decoder 30 of Figure 1. The decoder is operable to reverse the encoding process and comprises an unshuffle unit 2010, an unpack unit 2020 with an external SDRAM 2100, an entropy decoding module 2200, an inverse quantiser 2300 and an inverse DCT module 2400. The sync-block data signals SB1 and SB2 that are either read from the recording medium or received across a data transfer network are received by the unpack unit 2020 that implements an unpacking function by writing to and reading from the external SDRAM 2100. The unpacked data is supplied to the entropy decoder that reverses the Huffman coding to recover the quantised coefficients which are supplied to the inverse quantiser 2300. The inverse quantiser 2300 uses information supplied by the encoder 10 about the quantisation divisors and multiplies the quantised coefficients by the appropriate quantisation divisors to obtain an approximation to the original DCT coefficients. This inverse quantisation process does not restore the original precision of the coefficients so quantisation is a "lossy" compression technique. The output from the inverse quantiser 2300 is supplied to the inverse DCT module 2400 that processes each block of frequency domain DCT coefficients using an inverse discrete cosine transform to recover a representation of the image blocks in the spatial domain. The output of the inverse DCT module 2400 will not be identical to the pre-encoded pixel block due to the information lost as a result of the quantisation process. Finally the output of the inverse DCT module 2400 is supplied to the unshuffle unit 2010 where the data is unshuffled to recover the image block ordering of the pre-encoded image. The output of the unshuffle unit 2000 comprises the three colour component video signals RGB from which the image can be reconstructed.

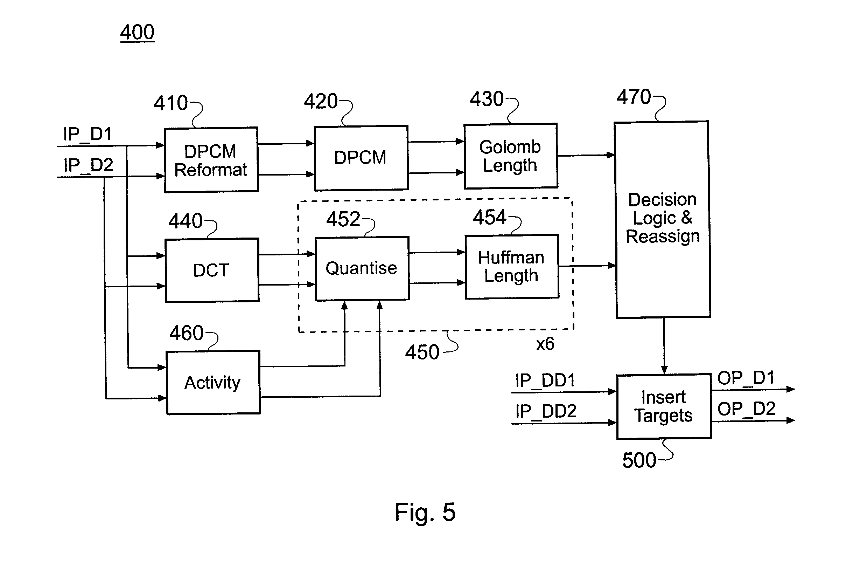

Figure 5 schematically illustrates the bit allocation module 400 of Figure 2. This module has three main functions: firstly it selects the encoding mode for each Macro-Block from the two available alternatives of lossless DPCM and lossy DCT encoding; secondly it calculates a target number of bits MB_TARGET for each Macro-Block from a similar target for the associated Macro-Block Unit; and thirdly is calculates a Q_SCALE value Q_BASE defined to be the starting scale for a binary search that is performed by the binary search module 700. The binary search module 700 determines a Q_SCALE value Q_ALLOC, which is obtained using a higher resolution Q_SCALE search than that used to obtain the value Q_BASE.

The shuffled output image data signals S_OP_D1 and S_OP_D2 from the shuffling unit 100 are supplied as input to the bit allocation module 400. These input signals comprise raster scanned $8_H \times 8_V$ DCT blocks of 12-bit video samples.

A parameter estimation circuit is implemented in the shuffle module 100 of the encoder of Figures 2. The parameter estimation circuit estimates values for DCT_PRECISION which is set and fixed prior to performing the series of trial quantisations and it also calculates a Q_SCALE value Q_START which is used to determine the quantisation divisors for the lowest resolution trial quantisations performed by the bit allocation module 400. The final DCT_PRECISION and Q_START values produced by the parameter estimation circuit are also supplied as input to the bit allocation module 400.

The bit allocation module 400 comprises a DPCM reformat module 410; a DPCM module 420; a Golomb length module 430; a DCT module 440, a lossy encoding module 450 having a quantisation module 452 and a Huffman length module 454; an activity module 460; and a decision logic unit 470. The decision logic unit 470 supplies input to the target insertion module 500.

The bit allocation module 400 makes encoding decisions based on the trial encoding of a Macro-Block Unit, which for this embodiment consists of 204 MBs. The encoding mode decision selects either lossless DPCM or lossy DCT mode encoding. The decision is made by performing a single DPCM encoding stage (performed in combination by the DPCM reformat module 410, the DPCM module 420 and the Golomb length module 430) the results of which are compared with the outcome of 6 DCT trial encoding stages. The 6 DCT trial encoding stages involve a single discrete cosine transform in the DCT module 440 followed by six cycles through the lossy encoding unit 450. In DCT mode encoding the activity module 460 is operable to adjust the quantisation divisors that are applied to the data by the quantisation module 452. The calculations performed by the activity module 460 are described in detail below.

In Figure 5, the Decision Logic unit 470 is supplied with the output of the Golomb Length module 430 which is the entropy encoding stage of DPCM encoding and is also supplied with the output of the Huffman length module 454 which is the entropy encoding stage of DCT quantisation encoding. The decision Logic unit 470 compares the results for the DPCM trial encoding and the DCT trial encoding. Lossless DPCM is selected for a Macro-Block if, and only if, it results in a lower overall bit count. The Decision Logic unit 470 is operable to calculate the target bit count targets for both the Macro-Block Units and Macro-Blocks.

The Activity module 460, which is part of the DCT mode encoding circuitry, is used to calculate an activity measure based on the pixel variance of image blocks. It is known that harsher quantisation is less perceptible to the viewer in image blocks which have higher activity levels. The quantisation step for each block can be offset by suitably adjusting the Q_SCALE quantisation divisor used in the quantisation module 452 so that higher activity blocks are quantised more harshly. As we shall explain more fully below, the Q_SCALE_CODEs that are used for the bit allocation process depend on whether we have "activity off" or "activity on". Note that the activity factor NORM_ACT appears in the denominator of the formula for the quantisation of the AC DCT coefficients Q(AC) above.

Activity is calculated only once for each Macro-Block. Values of a parameter INTRAMAD are calculated for each $8_H x 8_V$ DCT block in Macro-Block: for luminance (Y) DCT blocks only in YCbCr mode and for R, G and B DCT blocks in RGB mode. IntraMAD is defined as follows:

$$\text{INTRAMAD}[j] = \sum_{i=1}^{64} \left| dct[i,j] - dct\_dc[j] \right| / 64$$

where dct[i, j] is the pixel value of pixel i in DCT block number j. The parameter dct_dc[j] is the mean value of dct[i, j] for the $8_H x 8_V$ DCT block (and for a given signal component) and it is given by the formula:

$$dct\_dc[j] = \left( \sum_{i=1}^{64} dct[i,j] \right) / 64$$

The minimum VALUE OF INTRAMAD for all of the Y or RGB DCT blocks in the Macro-Block is calculated as follows:

$$\text{MINMAD} = \min_{j=1}^{n} (\text{INTRAMAD}[j])$$

and the activity, ACT is given by:

$$ACT = 1 + MinMAD$$

Since values for ACT range from 1 to several thousand the activity is normalised so that it lies within a predetermined range. In this embodiment ACT is normalised using previous Macro-Block Unit data to give a normalised activity measure NORM_ACT that lies in the range 0.5 to 2:

$$NORM\_ACT=(2.ACT+AVG\_ACT) / (ACT+2.AVG\_ACT),$$

where AVG_ACT = Average of ACT from previous MBU.

At the start of an image sequence or if a scene change has been detected (using a standard method) a default value DEFAULT_AVG_ACT that depends on Q_START and DCT_PRECISION is used instead of AVG_ACT. For the first MBU in any frame (except for the first frame in the sequence), a value FRM_AVG_ACT given by the average of ACT for all MBUs in previous frame is used in place of AVG_ACT. Although for this embodiment the activity is normalised to lie in the range 0.5 to 2.0, in alternative embodiments it may be normalised to any range *p*/*q to q*/*p* using the following general equation:

$$NORM\_ACT= (q.ACT+p.\,AVG\_ACT) / (p.ACT+ q.\,AVG\_ACT)$$

So that for the selected NORM_ACT range of 0.5 to 2.0, the parameters p and q have the values 1 and 2 respectively.

To increase repeatability over multiple generations of encoding, NORM_ACT is constrained to a fixed number of levels. For the given range of 0.5 to 2, NORM_ACT is constrained to the 8 levels {4/8, 5/8, 6/8, 7/8, 1, 4/3, 5/3, 2}.

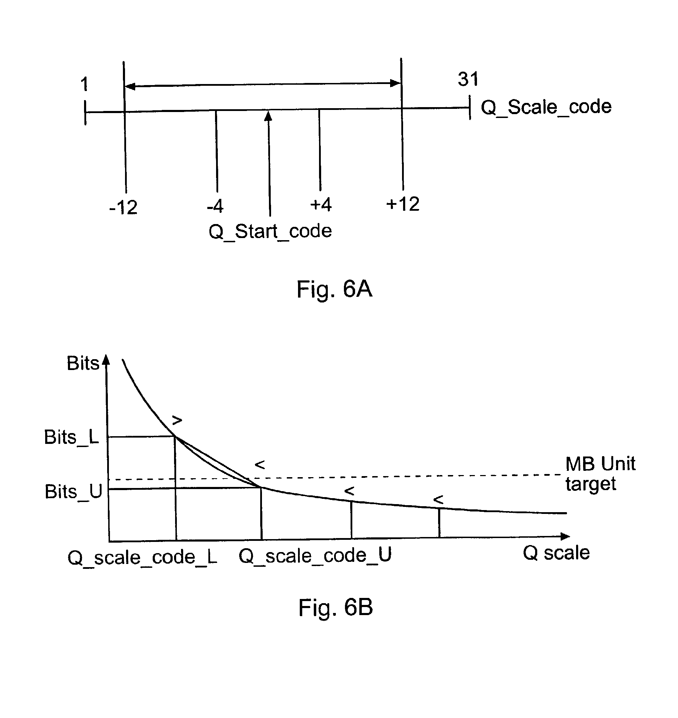

Figure 6A schematically illustrates a system for assigning bit allocation points in the encoder of Figure 2. A fixed number, say 4, bit allocation points are positioned around a Q_SCALE_CODE value Q_START_CODE. Q_START_CODE was calculated by the shuffling unit using properties of the input images such as sums of pixel differences. In the example of Figure 6A we are considering the least harsh value DCT_PRECISION=0 and "activity off". In this case the values used for bit allocation are separated by 8 Q_SCALE_CODES and they cover a range that accounts for any error in Q_START_CODE. With "activity on" the four values used for bit allocation might be separated by 4 Q_SCALE_CODES.

Figure 6B is a graph of the number of bits generated versus the Q_SCALE for four values of Q_SCALE corresponding to the 4 bit allocation Q_SCALE_CODES. The Macro-Block targets are calculated from corresponding targets for a group of Macro-Blocks known as a Macro-Block Unit. The Q_SCALE_CODE, Q_SCALE_CODE_L gives a bit count Bits_L that is just above the MB unit target whereas Q_SCALE_CODE_U gives a bit count Bits_U that is just below the MB unit target. Note that the larger the Q_SCALE_CODE, the harsher the quantisation and the lower the bit count. The MB target is met by performing a linear interpolation between these two values.

If the bit allocation points are too widely spaced it is unlikely that the MB targets calculated for the 2nd generation image data will match the targets that were used for the 1st generation image data. To achieve the best quality reproduced 2nd generation image it is important that the MB targets used for the 1st generation encoding should be repeatable.

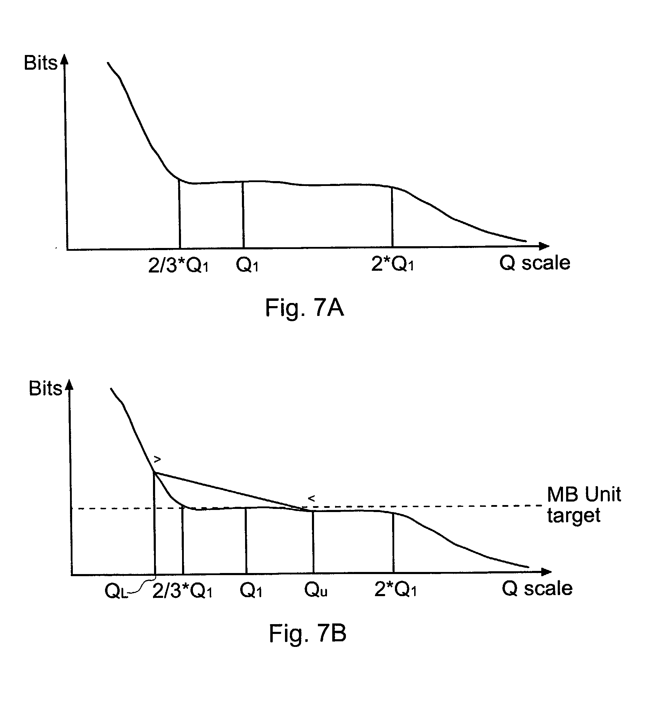

Figure 7A is a graph of bit count versus Q_SCALE for a 2nd generation image. The flat portion of the curve is a result of the 1st generation compression at a Q_SCALE=$Q_1$. The characteristic flat portion of the "bits versus Q_SCALE" curve for previously compressed image data extends from $2/3*Q_1$ up to $2*Q_1$. Figure 7B shows the bits versus Q_SCALE profile of the 2nd generation image data and illustrates the effects of bit allocation points that are too widely spaced. The upper Q_SCALE bit allocation value $Q_U$ lies on the flat portion of the curve whereas the lower Q_SCALE bit allocation value $Q_L$ lies on the portion of the curve having a steep negative gradient. The more ideal Q_SCALE value corresponds to the flat portion of the curve. However the linear extrapolation between $Q_U$ and $Q_L$ means that the predicted MB target is higher than the actual number of bits produced by applying a Q_SCALE selected from the range $2/3*Q_1$ to $Q_U$. This can result in the binary search module 700 selecting a Q_SCALE that is too high. The Q_SCALE selected by the binary search module 700 is used to define the starting point for the back search so if the binary search Q_SCALE value (Q_ALLOC) is too high it also adversely affects the back search and cannot get back to the first generation Q_SCALE.

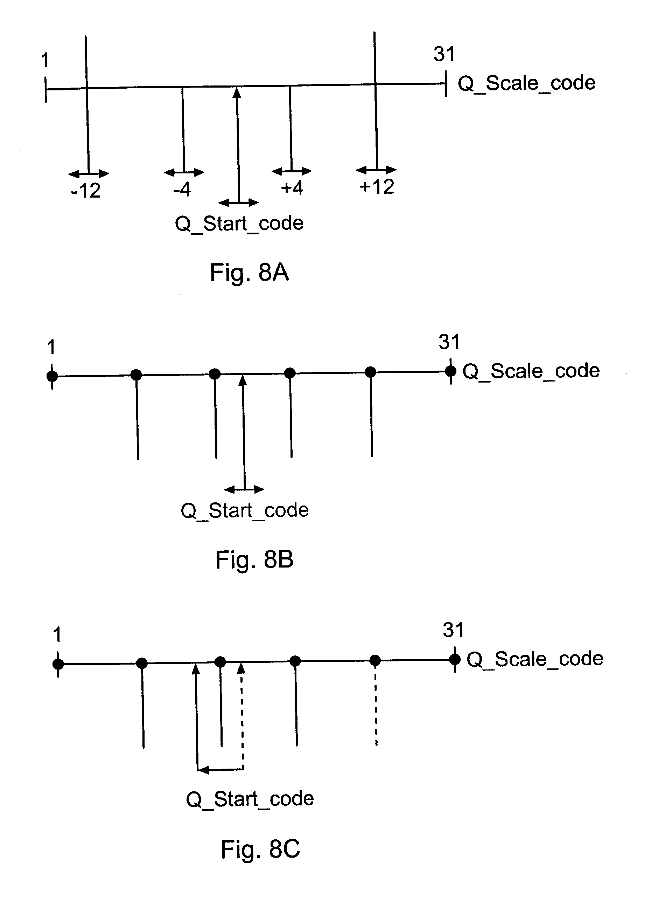

Figure 8 schematically illustrates how the predetermined subset of Q_SCALE_CODES is used to reduce variation in the selected bit allocation points. Figure 8A (identical to Figure 6A) illustrates the situation where Q_START_CODE defines the centre of the range of selected Q_SCALE_CODEs. In this case a change in the value of Q_START_CODE would result in a change in all 4 selected Q_SCALE_CODEs. Figure 8B shows that Q_START_CODE is used to determine which set of a range of fixed and equally spaced Q_SCALE_CODEs are selected for bit allocation. In this case 4 Q_SCALE_CODEs are selected so that the central two Q_SCALE_CODEs straddle the Q_START_CODE. Figure 8C illustrates that when Q_START_CODE shifts in value e.g. from one generation to the next or one image frame to the next, then 3 of the 4 selected Q_SCALE_CODEs remain the same as those selected in Figure 8B.

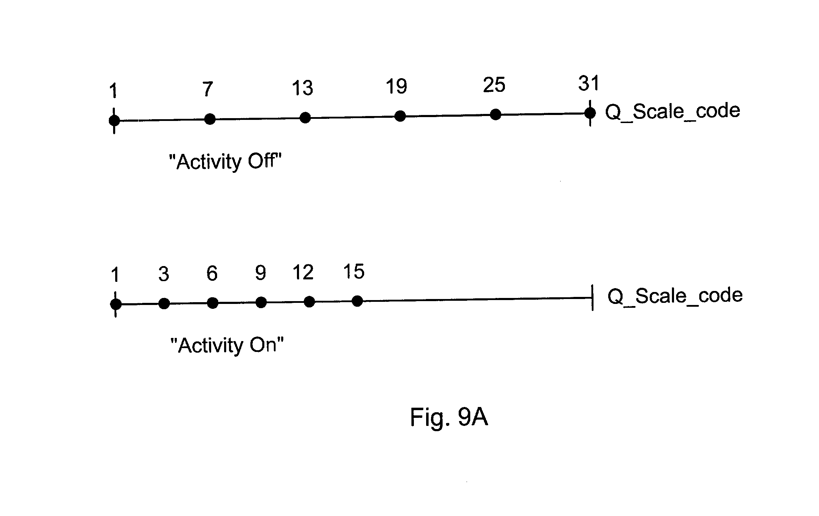

Figure 9A shows a "linear" set of fixed bit allocation points which result in improved target repeatability. In this case 6 bit allocation stages are included in the set which comprises Q_SCALE_CODES {1, 7, 13, 19, 25, 31} for activity off. Whereas, for activity on, to allow for the possible factor of 2 effect, the set of six bit allocation values comprises Q_SCALE_CODES {1, 3, 6, 9, 12, 15}.

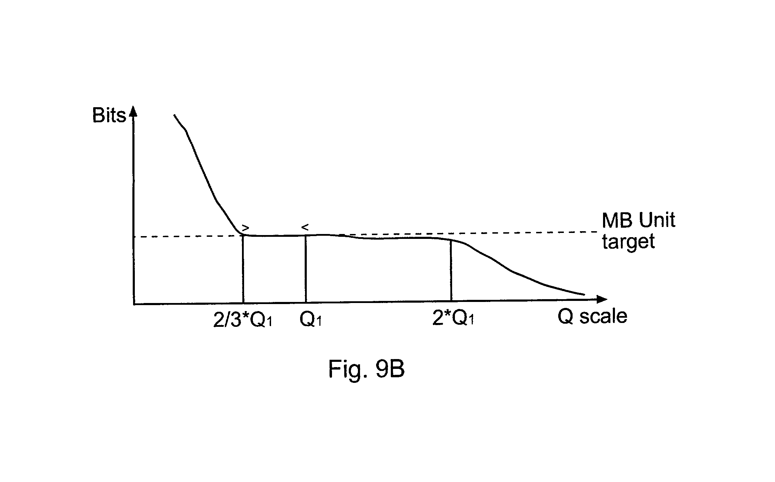

A further improvement in target repeatability can be achieved by reducing the spacing between the fixed bit allocation stages so that in the graph of bits versus Q_SCALE, interpolation across a bend in the curve is less likely to occur. The limiting case is illustrated by the graph of Figure 9B. This shows that ideally:

$$\frac{Bit\ allocate\ stage\ (N+1)}{Bit\ allocate\ stage\ (N)} = \frac{Q_1}{2/3 \ast Q_1} = 1.5$$

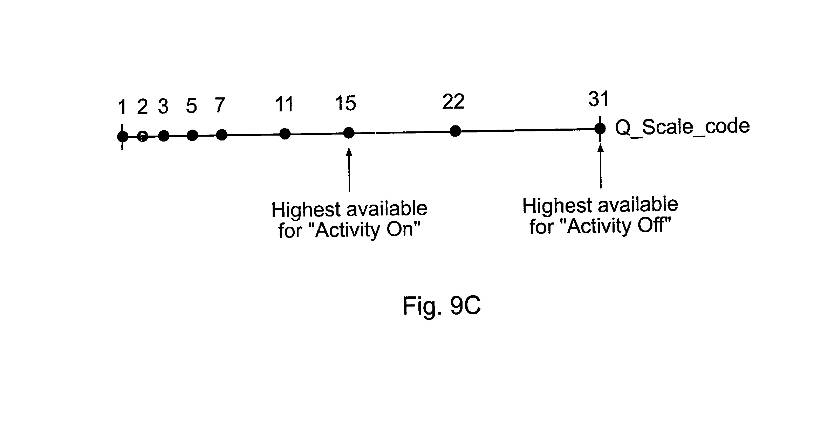

although it is acceptable if the ratio is slightly greater than or slightly less than 1.5. This rule was used to devise the example set of non-linear set of fixed bit allocation points shown in Figure 9C which comprises Q_SCALE_CODES {1, 2, 3, 5, 7, 11, 15, 22, 31}. Due to the effects of the factor NORM_ACT, the highest available Q_SCALE_CODE for activity off is 31 whereas the highest available Q_SCALE_CODE for activity on is 15. Furthermore the set of bit allocate points are dependent on the value of DCT_PRECISION since, as explained below, the minimum bit allocation point depends on the MINIMUM_Q value at the selected DCT_PRECISION.

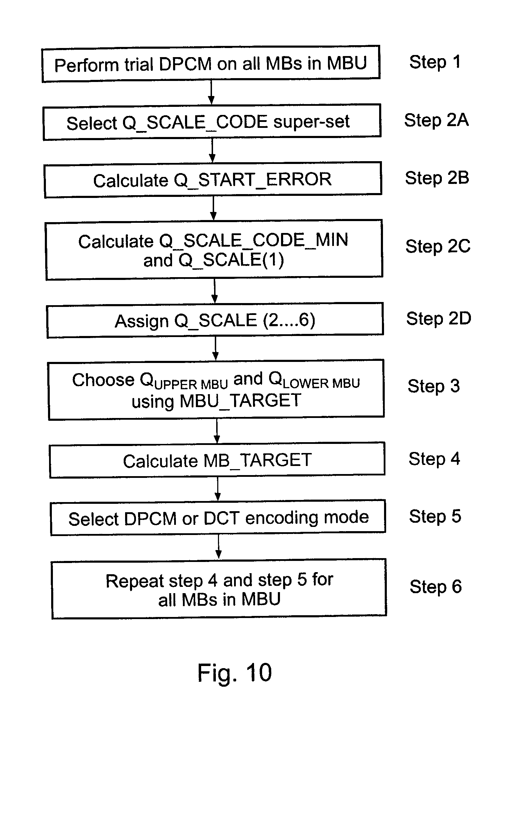

Figure 10 is a flow chart representing the algorithm implemented on each MBU by the bit allocation module according an embodiment of the invention. Step 1 is performed in combination by the DPCM reformat module 410, the DPCM module and the Golomb length module. Steps 2A to 2D are performed by the quantise module 452 and Steps 3, 4 and 5 are performed by the decision Logic module 470.

Step 1 involves performing one stage of lossless DPCM trial encoding on all MBs in the MBU to determine for each MB the number of bits, MB_DPCM_BITS, produced by DPCM encoding.

Step 2A involves performing 6 stages of lossy DCT encoding on all MBs within the MBU to determine for each block and for each of 6 quantisation divisors Q_SCALE(1..6), the number of bits MB_DCT_BITS(Q_SCALE) produced by lossy DCT encoding the MB. Each value of Q_SCALE value is specified by one of 31 Q_SCALE_CODES in combination with a Q_SCALE_TYPE that is either linear or non-linear. Rather than performing a complete scan of the full range of Q_SCALE quantisation divisors associated with the 31 available Q_SCALE_CODES, a subset (SS) of Q_SCALE_CODEs is selected. The SS is defined by taking into account both the value of DCT_PRECISION and whether activity is on or off. For example for a DCT_PRECISION = 1, with activity off the subset is given by:

SS = [2, 3, 5, 7, 10, 15, 22, 31]

whereas with activity on (0.5 - 2 in this case), the subset is given by:

SS = [2, 3, 5, 7, 10, 15]

Table 1 below shows the bit allocation subset used in this embodiment of the invention for each value of DCT_PRECISION for both "activity on" and "activity off".

Table 1:

| Subset of Q_SCALE_CODEs for Bit Allocation | | | | | | | | |
|---|---|---|---|---|---|---|---|---|
| DCT PRECISION | 0 | | 1 | | 2 | | 3 | |
| Activity | Off | On | Off | On | Off | On | Off | On |
| ss(0) | 4 | - | 2 | 2 | 1 | 1 | 1 | 1 |
| ss(1) | 6 | - | 3 | 3 | 2 | 2 | 2 | 2 |
| ss(2) | 10 | - | 5 | 5 | 3 | 3 | 3 | 3 |
| ss(3) | 15 | - | 7 | 7 | 5 | 5 | 5 | 5 |
| ss(4) | 22 | - | 10 | 10 | 7 | 7 | 7 | 7 |
| ss(5) | 31 | - | 15 | 15 | 11 | 11 | 11 | 11 |
| ss(6) | - | - | 22 | - | 15 | 15 | 15 | 15 |
| ss(7) | - | - | 31 | - | 22 | - | 22 | - |
| ss(8) | - | - | - | - | 31 | - | 31 | - |
| Q start error | 24 | | 12 | | 6 | | 3 | |

The 6 Q_SCALES used for the trial quantisation correspond to the quantisation divisors associated with 6 of the Q_SCALE_CODEs from the appropriate SS. Note that each SS will typically comprise more than 6 Q_SCALE_CODEs. The value of Q_START is used to select the 6 particular Q_SCALE_CODEs from the subset to be used for the trial quantisation procedure.

The lowest allowable Q_SCALE_CODE in the subset is the code that represents the quantisation factor MINIMUM_Q where:

$$MINIMUM\_Q = 2^{(3 - DCT\_PRECISION)}$$

or if this code does not exist then the lowest allowable Q_SCALE_CODE is the lowest Q_SCALE_CODE that represents a number greater than the MINIMUM_Q.

Step 2B involves a calculation of the error in Q_START which is related to the value of DCT_PRECISION and is given by:

$$Q\_START\_ERROR = 24/(2^{DCT\_PRECISION})$$

so for values of DCT_PRECISION where quantisation is less harsh the error in Q_START is greater.

Step 2C involves calculating Q_SCALE_MIN that is given by Q_START minus Q_START_ERROR and obtaining the Q_SCALE_CODE Q_SCALE_CODE_MIN that is associated with Q_SCALE_MIN from the look-up table of Figure 3. The closest Q_SCALE_CODE in the subset that is less than or equal to Q_SCALE_CODE_MIN is identified and the quantisation divisor associated with that Q_SCALE_CODE is defined to be the first of the six trial quantisation parameters i.e. Q_SCALE(1). If however there is no Q_SCALE_CODE in the subset that is less than or equal to Q_SCALE_CODE_MIN then Q_SCALE(1) is set to the quantisation factor associated with the lowest Q_SCALE_CODE in the subset.

Step 2D involves assigning the remaining five trial quantisation factors Q_SCALE(2) to Q_SCALE(6) to the quantisation scales represented by the five next contiguous Q_SCALE_CODES in the subset that are higher than Q_SCALE(1). If there are insufficient Q_SCALE_CODES in the subset to allow this, then Q_SCALE(6) is set to the uppermost Q_SCALE_CODE in the subset and the values Q_SCALE(1...5) are set to the next 5 Q_SCALE_CODES from the subset below Q_SCALE(6).

Step 3 involves performing the six trial DCT quantisations and summing the values of MB_DCT_BITS (Q_SCALE) over all of the Macro-Blocks in a Macro-Block Unit to produce the value MBU_DCT_BITS(Q_SCALE) for each of the 6 Q_SCALEs. A bit count target for each MBU is calculated from a predetermined FRAME_TARGET defined for each image frame (or field) such that:

$$MBU\_TARGET = FRAME\_TARGET / 40.$$

The set of six values of MBU_DCT_BITS(Q_SCALE) are compared to MBU_TARGET and the two values $B_U{}^{MBU}$ and $B_L{}^{MBU}$ of MBU_DCT_BITS(Q_SCALE) that lie just above and just below the MBU_TARGET respectively are defined as follows:

$$B_U{}^{MBU} \equiv MBU\_DCT\_BITS(Q\_SCALE(n)) > MBU\_TARGET$$

$$B_L{}^{MBU} \equiv MBU\_DCT\_BITS(Q\_SCALE(n+1)) <= MBU\_TARGET$$

Figure 11A is an illustrative graph of MBU_DCT_BITS against Q_SCALE and shows the two bit count values $B\_L{}^{MBU}$ and $B\_U{}^{MBU}$ that correspond to the Q_SCALE codes Q_SCALE(n) and Q_SCALE(n+1) respectively. Note that the smaller quantisation divisor Q_SCALE(n) gives a higher bit count than the larger quantisation factor Q_SCALE(n+1). Some properties of this bits versus Q_SCALE graph for the macroblock unit will be used to derive a target bit count MB_TARGET for each MB belonging to the MBU. In particular, Figure 11A shows the quantities X, Y and Z which are defined as follows:

$$X \equiv MBU\_TARGET - B\_U{}^{MBU};$$

$$Y \equiv B\_L^{MBU} - MBU\_TARGET \, ;$$

and

$$Z \equiv B\_L^{MBU} - B\_U^{MBU} = X + Y$$

so that

$$MBU\_TARGET = (B\_L^{MBU} \, X + B\_U^{MBU} Y) \, / \, Z.$$

Accordingly in Step 4 of Figure 8 the MB_TARGET is calculated as follows:

$$MB\_TARGET = X * MB\_DCT\_BITS(Q\_SCALE(n)) \, / \, Z +$$

$$Y * MB\_DCT\_BITS(Q\_SCALE(n+1)) \, / \, Z$$

and if Z=0 division by zero is avoided by simply setting MB_TARGET = MB_DCT_BITS(Q_SCALE(n)).

In Step 5 a decision is made between lossless DPCM encoding and lossy DCT encoding for each MB in the MBU by comparing MB_DPCM_BITS to MB_TARGET. If MB_DPCM_BITS is greater than MB_TARGET then lossy DCT encoding is selected for the macroblock. If however MB_DPCM_BITS is less than or equal to MB_TARGET then the lossless DPCM encoding mode is selected for the macroblock. Each time lossless DPCM encoding is selected for a MB then MBU_TARGET is recalculated such that MBU_TARGET = MBU_TARGET - MB_DPCM_BITS. Also, MBU_DCT_BITS(Q_SCALE(n)) and MBU_DCT_BITS(Q_SCALE(n+1)) are recalculated as follows:

$$MBU\_DCT\_BITS(Q\_SCALE(n)) =$$

$$MBU\_DCT\_BITS(Q\_SCALE(n)) - MB\_DCT\_BITS(Q\_SCALE(n))$$

$$MBU\_DCT\_BITS(Q\_SCALE(n+1)) =$$

$$MBU\_DCT\_BITS(Q\_SCALE(n+1)) - MB\_DCT\_BITS(Q\_SCALE(n+1)$$

Since MBU_TARGET is recalculated in Step 5, the MB_TARGETS have to be recalculated taking account of the number of MBs currently assigned to lossy DCT mode encoding. Step 4 and Step 5 are repeated for all lossy DCT mode MBs until no more MBs switch to DPCM encoding mode in Step 5. Typically 5 or 6 iterations of Steps 4 and 5 are sufficient to achieve this.

It is necessary to consider situations where an inaccurate estimate for Q_START means that the appropriate quantisation divisor Q_SCALE lies outside the bit allocation search range (comprising 6 Q_SCALES). In such cases an alternative strategy to that of Steps 3 and 4 above is required in order to calculate MB_TARGET. There are two possible scenarios to consider.

Firstly, if in step 3 MBU_DCT_BITS(Q_scale(n)) is less than or equal to MBU_target for all 6 values of n, indicating that the quantisation is too harsh for all 6 trial values, then MB_TARGET in step 4 is calculated as follows:

$$MB\_TARGET = \frac{MB\_DCT\_BITS(Q\_SCALE(1)) \times MBU\_TARGET}{MBU\_DCT\_BITS(Q\_SCALE(1))}$$

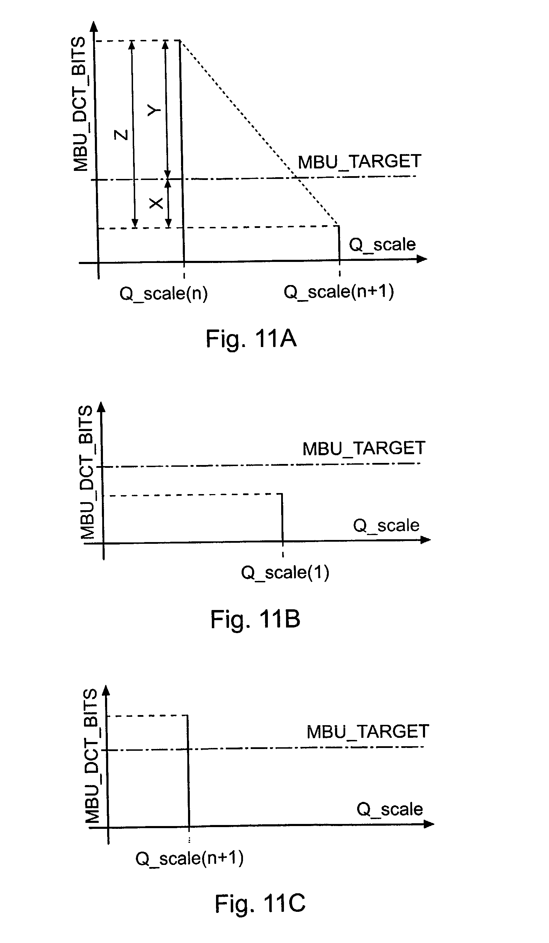

This first scenario is illustrated by Figure 11B.

Secondly, if in step 3, the value MBU_DCT_BITS(Q_SCALE(n+1)) is greater than MBU_TARGET for all 6 values of n, indicating that the quantisation is not harsh enough for any of the 6 trial values, then Q_SCALE(5) and Q_SCALE(6) are selected as Q_SCALE(n) and Q_SCALE(n+1) in step 3. In this case Step 4 remains unchanged, but now has the effect of extrapolating MB_TARGET. This second scenario is illustrated by Figure 11C.

In addition to calculating MB_TARGETS, the bit allocation module 400 sets the value of Q_BASE which is the starting Q_SCALE for the binary search. The Q_SCALE value Q_BASE is determined from MB_TARGET using the appropriate MB_DCT_BITS versus Q_SCALE curve. If we have a 5 stage binary search, as in this embodiment, then Q_BASE is simply the Q_SCALE given by Q_SCALE_CODE = 16 (i.e. the midpoint of the quantiser table). Thus the binary search can cover the whole range of Q_SCALE by starting at this Q_BASE. However, in alternative embodiments which use fewer binary search stages, Q_BASE is set midway between Q_SCALE(n) and Q_SCALE(n+1) for each Macro-Block. For only those macroBlocks assigned to lossy DCT mode encoding, the values of Q_BASE and MB_TARGET are output by the Decision logic unit 470 and added to the bitstream comprising the image data IP_DD1 and IP_DD2 that has been delayed by one MBU by the target insertion module 500. The values MB_TARGET and Q_BASE are supplied to the binary search module which uses them in determining the final Q_SCALE.

**Claims**

1. A data compression apparatus operable to compress input data, in accordance with a predetermined target output data quantity, by performing data quantisation at a degree of quantisation taken from a set of available degrees of quantisation, the apparatus comprising:

   one or more trial quantisers for performing trial quantisations at respective trial degrees of quantisation, the trial degrees of quantisation being taken from a subset of the set of available degrees of quantisation;
   a selector for selecting a final degree of quantisation in response to the results of the trial quantisations, the final degree of quantisation being selected from the set of available degrees of quantisation such that the target output data quantity is not exceeded; and
   a final quantiser operable to quantise the input data at the final degree of quantisation.

2. Apparatus according to claim 1, the input data being image data.

3. Apparatus according to claim 1 or claim 2, comprising a quantisation starting point estimator for determining, from a property of the input data, a quantisation starting point appropriate to the predetermined target output data quantity, wherein the trial degrees of quantisation are set in dependence upon the quantisation starting point.

4. A data compression method in which input data is compressed in accordance with a predetermined target output data quantity, by performing data quantisation at a degree of quantisation taken from a set of available degrees of quantisation, the method comprising the steps of:

   performing one or more trial quantisations at respective trial degrees of quantisation, the trial degrees of quantisation being taken from a subset of the set of available degrees of quantisation;
   selecting a final degree of quantisation in response to the results of the trial quantisations, the final degree of quantisation being selected from the set of available degrees of quantisation such that the target output data quantity is not exceeded; and
   quantising the input data at the final degree of quantisation.

5. Computer software having program code for carrying out a method according to claim 4.

6. A data providing medium by which computer software according to claim 5 is provided.

7. A medium according to claim 6, the medium being a transmission medium.

8. A medium according to claim 6, the medium being a storage medium.

Fig. 1

Fig. 2

EP 1 351 518 A2

| Q_SCALE_CODE | Q_SCALE | |
| --- | --- | --- |
| | Q_SCALE_TYPE=0 (Linear Quantiser) | Q_SCALE_TYPE=1 (Non-Linear Quantiser) |
| 1 | 2 | 1 |
| 2 | 4 | 2 |
| 3 | 6 | 3 |
| 4 | 8 | 4 |
| 5 | 10 | 5 |
| 6 | 12 | 6 |
| 7 | 14 | 7 |
| 8 | 16 | 8 |
| 9 | 18 | 10 |
| 10 | 20 | 12 |
| 11 | 22 | 14 |
| 12 | 24 | 16 |
| 13 | 26 | 18 |
| 14 | 28 | 20 |
| 15 | 30 | 22 |
| 16 | 32 | 24 |
| 17 | 34 | 28 |
| 18 | 36 | 32 |
| 19 | 38 | 36 |
| 20 | 40 | 40 |
| 21 | 42 | 44 |
| 22 | 44 | 48 |
| 23 | 46 | 52 |
| 24 | 48 | 56 |
| 25 | 50 | 64 |
| 26 | 52 | 72 |
| 27 | 54 | 80 |
| 28 | 56 | 88 |
| 29 | 58 | 96 |
| 30 | 60 | 104 |
| 31 | 62 | 112 |

Fig. 3

Fig. 4

EP 1 351 518 A2

EP 1 351 518 A2

400

IP_D1
IP_D2

410 DPCM Reformat
420 DPCM
430 Golomb Length
440 DCT
452 Quantise
454 Huffman Length
450 — x6
460 Activity
470 Decision Logic & Reassign
500 Insert Targets

IP_DD1
IP_DD2

OP_D1
OP_D2

Fig. 5

Fig. 6A

Fig. 6B

Fig. 7A

Fig. 7B

1                                                          31
                                                           Q_Scale_code

-12          -4                 +4          +12

Q_Start_code

Fig. 8A

1                                                          31
                                                           Q_Scale_code

Q_Start_code

Fig. 8B

1                                                          31
                                                           Q_Scale_code

Q_Start_code

Fig. 8C

EP 1 351 518 A2

1      7      13      19      25      31

●━━━●━━━●━━━●━━━●━━━● Q_Scale_code

"Activity Off"

1  3  6  9  12  15

●━●━●━●━●━●━━━━━━━━━━┤ Q_Scale_code

"Activity On"

Fig. 9A

Fig. 9B

EP 1 351 518 A2

1 2 3 5 7   11   15        22           31

Q_Scale_code

Highest available
for "Activity On"

Highest available
for "Activity Off"

Fig. 9C

| | |
|---|---|
| Perform trial DPCM on all MBs in MBU | Step 1 |
| Select Q_SCALE_CODE super-set | Step 2A |
| Calculate Q_START_ERROR | Step 2B |
| Calculate Q_SCALE_CODE_MIN and Q_SCALE(1) | Step 2C |
| Assign Q_SCALE (2....6) | Step 2D |
| Choose $Q_{UPPER\ MBU}$ and $Q_{LOWER\ MBU}$ using MBU_TARGET | Step 3 |
| Calculate MB_TARGET | Step 4 |
| Select DPCM or DCT encoding mode | Step 5 |
| Repeat step 4 and step 5 for all MBs in MBU | Step 6 |

Fig. 10

Fig. 11A

Fig. 11B

Fig. 11C